# EUROPEAN PATENT SPECIFICATION

(11) **EP 1 194 459 B1**
(45) Date of publication and mention of the grant of the patent: **14.12.2005**
(21) Application number: 99954976.9
(22) Date of filing: 14.10.1999
(51) Int. Cl.: C08F 10/00

(54) **PROCESS FOR THE POLYMERIZATION OF OLEFINS; POLYOLEFINS, AND FILMS AND ARTICLES PRODUCED THEREFROM**
VERFAHREN FÜR DIE POLYMERISATION VON OLEFINEN; POLYOLEFINE, UND FILME UND DARAUS HERGESTELLTE GEGENSTAENDE
PROCEDE DE POLYMERISATION D'OLEFINES, POLYOLEFINES, ET FILMS ET ARTICLES PRODUITS A PARTIR DE CELLES-CI

(30) Priority: 25.06.1999 US 141141 P; 31.08.1999 US 386546
(43) Date of publication of application: 10.04.2002
(73) Proprietor: EASTMAN CHEMICAL COMPANY, Kingsport, TN 37660 (US)
(72) Inventor: FORD, Randal, Ray, Longview, TX 75605-1505 (US); STUART, Richard, Kingsley, Jr., Longview, TX 75604-3112 (US)
(74) Representative: Wibbelmann, Jobst
(86) International application number: PCT/US1999/024233
(87) International publication number: WO 2001/000691

(56) References cited:
- EP-A- 0 435 514
- US-A- 4 659 685
- US-A- 5 258 475

## Description

### FIELD OF INVENTION

The present invention relates to a process utilizing a metallocene catalyst for the polymerization of olefins having narrowed molecular weight distribution (MWD) values. Additionally, this invention relates to novel polyolefins, and films and articles of manufacture produced therefrom.

### BACKGROUND OF INVENTION

Polyolefins are well known in the art. For example polyethylene and interpolymers of ethylene are well known and are useful in many applications. In particular interpolymers of ethylene, also known as copolymers, terpolymers, and the like of ethylene, possess properties which distinguish them from other polyethylene polymers, such as branched ethylene homopolymers commonly referred to as LDPE (low density polyethylene). Certain of these properties are described by Anderson et al, U.S. Patent No. 4,076,698.

A particularly useful polymerization medium for producing polymers and interpolymers of olefins such as ethylene is a gas phase process. Examples of such are given in U.S. Patent Nos. 3,709,853; 4,003,712; 4,011,382; 4,302,566; 4,543,399; 4,882,400; 5,352,749 and 5,541,270 and Canadian Patent No. 991,798 and Belgian Patent No. 839,380.

Metallocene catalysts are known for polymerizing and interpolymerizing olefins such as ethylene. Metallocene catalysts comprise at least one transition metal component having at least one moiety selected from substituted or unsubstituted cyclopentadienyl, substituted or unsubstituted pentadienyl, substituted or unsubstituted pyrrole, substituted or unsubstituted phosphole, substituted or unsubstituted arsole, substituted or unsubstituted boratabenzene, and substituted or unsubstituted carborane, and at least one co-catalyst component. Typical organometallic co-catalysts are alkyl aluminoxanes, such as methyl aluminoxane, and boron containing compounds such as tris(perfluorophenyl)boron and salts of tetrakis(perfluorophenyl)borate.

The metallocene catalysts can be supported on an inert porous particulate carrier.

### SUMMARY OF THE INVENTION

The process of the present invention comprises polymerizing at least one olefin in the presence of at least one metallocene catalyst comprising at least one transition metal component having at least one moiety selected from substituted or unsubstituted cyclopentadienyl, substituted or unsubstituted pentadienyl, substituted or unsubstituted pyrrole, substituted or unsubstituted phosphole, substituted or unsubstituted arsole, substituted or unsubstituted boratabenzene, and substituted or unsubstituted carborane, and at least one co-catalyst component, and a sufficient amount of at least one specified compound to obtain an olefin homopolymer or interpolymer having a narrower molecular weight distribution than an olefin homopolymer or interpolymer having a molecular weight distribution greater than two obtained in the absence of the added compound. The specified compound added to the polymerization process is selected from the following:
An inorganic oxide of germanium, tin and lead; and
Mixtures thereof.

Also provided is a process for narrowing molecular weight distribution of a polymer comprising at least one or more olefin(s) comprising contacting under polymerization conditions, at least one or more olefin(s) with at least one metallocene catalyst comprising at least one transition metal component having at least one moiety selected from substituted or unsubstituted cyclopentadienyl, substituted or unsubstituted pentadienyl, substituted or unsubstituted pyrrole, substituted or unsubstituted phosphole, substituted or unsubstituted arsole, substituted or unsubstituted boratabenzene, and substituted or unsubstituted carborane, and at least one co-catalyst component, and at least one of the specified compounds, wherein the specified compound is present in an amount sufficient that the molecular weight distribution of the resulting polymeric product is narrower than would be obtained in the absence of the specified compound. The specified are listed hereinabove.

All mention herein to elements of Groups of the Periodic Table are made in reference to the Periodic Table of the Elements, as published in "Chemical and Engineering News", 63(5), 27, 1985. In this format, the Groups are numbered 1 to 18.

In carrying out the novel polymerization process of the present invention, there may optionally be added any electron donor(s) and/or any halogenated hydrocarbon compound(s).

Also, the present invention comprises novel polyolefin hompolymers and copolymers. Further, the present invention comprises films and articles of manufacture produced from the novel polyolefin hompolymers and copolymers.

### DETAILED DESCRIPTION OF THE INVENTION

The present invention relates to a process for polymerizing at least one olefin in the presence of at least one metallocene catalyst comprising at least one transition metal component having at least one moiety selected from substituted or unsubstituted cyclopentadienyl, substituted or unsubstituted pentadienyl, substituted or unsubstituted pyrrole, substituted or unsubstituted phosphole, substituted or unsubstituted arsole, substituted or unsubstituted boratabenzene, and substituted or unsubstituted carborane, and at least one co-catalyst component, and a sufficient amount of at least one specified compound to obtain a polyolefin homopolymer or copolymer characterized by having a molecular weight distribution (MWD) narrower than an olefin homopolymer or interpolymer having a molecular weight distribution greater than two obtained in the absence of the added compound.

Also provided is a process for narrowing molecular weight distribution of a polymer comprising at least one or more olefin(s) comprising contacting under polymerization conditions, at least one or more olefin(s) with at least one metallocene catalyst comprising at least one transition metal component having at least one moiety selected from substituted or unsubstituted cyclopentadienyl, substituted or unsubstituted pentadienyl, substituted or unsubstituted pyrrole, substituted or unsubstituted phosphole, substituted or unsubstituted arsole, substituted or unsubstituted boratabenzene, and substituted or unsubstituted carborane, and at least one co-catalyst component, and at least one of the specified compounds, wherein the specified compound is present in an amount sufficient that the molecular weight distribution of the resulting polymeric product is narrower than would be obtained in the absence of the specified compound. The specified are listed hereinabove.

The polymerization of the at least one olefin herein may be carried out using any suitable process. For example, there may be utilized polymerization in suspension, in solution or in the gas phase media. All of these polymerization processes are well known in the art.

A particularly desirable method for producing polyethylene polymers according to the present invention is a gas phase polymerization process. This type process and means for operating the polymerization reactor are well known and completely described in U.S Patents Nos. 3,709,853; 4,003.712; 4,011,382; 4,012,573; 4,302,566; 4,543,399; 4,882,400; 5,352,749; 5,541,270; Canadian Patent No. 991,798 and Belgian Patent No. 839,380. These patents disclose gas phase polymerization processes wherein the polymerization zone is either mechanically agitated or fluidized by the continuous flow of the gaseous monomer and diluent. The entire contents of these patents are incorporated herein by reference.

In general, the polymerization process of the present invention may be effected as a continuous gas phase process such as a fluid bed process. A fluid bed reactor for use in the process of the present invention typically comprises a reaction zone and a so-called velocity reduction zone. The reaction zone comprises a bed of growing polymer particles, formed polymer particles and a minor amount of catalyst particles fluidized by the continuous flow of the gaseous monomer and diluent to remove heat of polymerization through the reaction zone. Optionally, some of the recirculated gases may be cooled and compressed to form liquids that increase the heat removal capacity of the circulating gas stream when readmitted to the reaction zone. A suitable rate of gas flow may be readily determined by simple experiment. Make up of gaseous monomer to the circulating gas stream is at a rate equal to the rate at which particulate polymer product and monomer associated therewith is withdrawn from the reactor and the composition of the gas passing through the reactor is adjusted to maintain an essentially steady state gaseous composition within the reaction zone. The gas leaving the reaction zone is passed to the velocity reduction zone where entrained particles are removed. Finer entrained particles and dust may be removed in a cyclone and/or fine filter. The gas is passed through a heat exchanger wherein the heat of polymerization is removed, compressed in a compressor and then returned to the reaction zone.

In more detail, the reactor temperature of the fluid bed process herein ranges from about 30°C to about 150°C. In general, the reactor temperature is operated at the highest temperature that is feasible taking into account the sintering temperatures of the polymer product within the reactor.

The process of the present invention is suitable for the polymerization of at least one or more olefins. The olefins, for example, may contain from 2 to 16 carbon atoms. Included herein are homopolymers, copolymers, terpolymers, and the like of the olefin monomeric units. Particularly preferred for preparation herein by the process of the present invention are polyethylenes. Such polyethylenes are defined as homopolymers of ethylene and interpolymers of ethylene and at least one alpha-olefin wherein the ethylene content is at least about 50% by weight of the total monomers involved. Exemplary alpha-olefins that may be utilized herein are propylene, 1-butene, 1-pentene, 1-hexene, 1-heptene, 1-octene, 4-methyl-1-pentene, 1-decene, 1-dodecene, 1-hexadecene and the like. Also utilizable herein are non-conjugated dienes and olefins formed in situ in the polymerization medium. When olefins are formed in situ in the polymerization medium, the formation of polyethylenes containing long chain branching may occur.

The polymerization reaction of the present invention is carried out in the presence of at least one metallocene catalyst. In the process of the invention, the catalyst can be introduced in any manner known in the art. For example, the catalyst can be introduced directly into the fluidized bed reactor in the form of a solution, a slurry or a dry free flowing powder. The catalyst can also be used in the form of a deactivated catalyst, or in the form of a prepolymer obtained by contacting the catalyst with one or more olefins in the presence of a co-catalyst.

Metallocene catalysts are well known in the industry and are comprised of at least one transition metal component and at least one co-catalyst component. The transition metal component of the metallocene catalyst comprises a compound having at least one moiety selected from substituted or unsubstituted cyclopentadienyl, substituted or unsubstituted pentadienyl, substituted or unsubstituted pyrrole, substituted or unsubstituted phosphole, substituted or unsubstituted arsole, substituted or unsubstituted boratabenzene, and substituted or unsubstituted carborane, and at least one transition metal. Preferably the moiety is a substituted or unsubstituted cyclopentadienyl. The transition metal is selected from Groups 3, 4, 5, 6, 7, 8, 9 and 10 of the Periodic Table of the Elements. Exemplary of such transition metals are scandium, titanium, zirconium, hafnium, vanadium, chromium, manganese, iron, cobalt, nickel, and the like, and mixtures thereof. In a preferred embodiment the transition metal is selected from Groups 4, 5 or 6 such as, for example, titanium, zirconium, hafnium, vanadium and chromium, and in a still further preferred embodiment, the transition metal is titanium or zirconium or mixtures thereof.

The co-catalyst component of the metallocene catalyst can be any compound, or mixtures thereof, that can activate the transition metal component(s)of the metallocene catalyst in olefin polymerization. Typically the co-catalyst is an alkylaluminoxane such as, for example, methylaluminoxane (MAO) and aryl substituted boron containing compounds such as, for example, tris(perfluorophenyl)borane and the salts of tetrakis(perfluorophenyl)borate.

There are many references describing metallocene catalysts in great detail. For example, metallocene catalysts are described in U.S. Patent Nos. 4,564,647; 4,752,597; 5,106,804; 5,132,380; 5,227,440; 5,296,565; 5,324,800; 5,331,071; 5,332,706; 5,350,723; 5,399,635; 5,466,766; 5,468,702; 5,474,962; 5,578,537 and 5,863,853. The entire contents of these patents are incorporated herein by reference.

The metallocene catalysts herein also include catalyst systems such as [C₅H₅B-OEt]₂ZrCl₂, [C₅H₄CH₂CH₂NMe₂]TiCl₃, [PCaMe₃Si(Me)₂NCMe₃]ZrCl₂, [C₅Me₄Si(Me)₂NCMe₃]TiCl₂, and (C₅H₅)(C₅H₇)ZrCl₂.

The metallocene catalysts herein can be introduced in the process of the present invention in any manner. For example, the catalyst components can be introduced directly into the polymerization medium in the form of a solution, a slurry or a dry free flowing powder. The transition metal component(s) and the co-catalyst component(s) of the metallocene catalyst can be premixed to form an activated catalyst prior to addition to the polymerization medium, or the components can be added separately to the polymerization medium, or the components can be premixed and then contacted with one or more olefins to form a prepolymer and then added to the polymerization medium in prepolymer form. When the catalyst components are premixed prior to introduction into the reactor, any electron donor compound may be added to the catalyst to control the level of activity of the catalyst.

Any or all of the components of the metallocene catalyst can be supported on a carrier. The carrier can be any particulate organic or inorganic material. Preferably the carrier particle size should not be larger than about 200 microns in diameter. The most preferred particle size of the carrier material can be easily established by experiment. Preferably, the carrier should have an average particle size of 5 to 200 microns in diameter, more preferably 10 to 150 microns and most preferably 20 to 100 microns.

Examples of suitable inorganic carriers include metal oxides, metal hydroxides, metal halogenides or other metal salts, such as sulphates, carbonates, phosphates, nitrates and silicates. Exemplary of inorganic carriers suitable for use herein are compounds of metals from Groups 1 and 2 of the Periodic Table of the Elements, such as salts of sodium or potassium and oxides or salts of magnesium or calcium, for instance the chlorides, sulphates, carbonates, phosphates or silicates of sodium, potassium, magnesium or calcium and the oxides or hydroxides of, for instance, magnesium or calcium. Also suitable for use are inorganic oxides such as silica, titania, alumina, zirconia, chromia, boron oxide, silanized silica, silica hydrogels, silica xerogels, silica aerogels, and mixed oxides such as talcs, silica/chromia, silica/chromia/titania, silica/alumina, silica/titania, silica/magnesia, silica/magnesia/titania, aluminum phosphate gels, silica co-gels and the like. The inorganic oxides may contain small amounts of carbonates, nitrates, sulfates and oxides such as Na₂CO₃, K₂CO₃, CaCO₃, MgCO₃, Na₂SO₄, Al₂(SO₄)₃, BaSO₄, KNO₃, Mg(NO₃)₂, Al(NO₃)₃, Na₂O, K₂O and Li₂O. Carriers containing at least one component selected from the group consisting of MgCl₂, SiO₂, Al₂O₃ or mixtures thereof as a main component are preferred.

Examples of suitable organic carriers include polymers such as, for example, polyethylene, polypropylene, interpolymers of ethylene and alpha-olefins, polystyrene, functionalized polystyrene, polyamides and polyesters.

The metallocene catalyst herein may be prepared by any method known in the art. The catalyst can be in the form of a solution, a slurry or a dry free flowing powder. The amount of metallocene catalyst used is that which is sufficient to allow production of the desired amount of the olefin polymer or interpolymer.

In carrying out the polymerization process of the present invention, the co-catalyst(s) is added to the polymerization medium in any amount sufficient to effect production of the desired olefin polymer or interpolymer. It is preferred to utilize the co-catalyst(s) in a molar ratio of co-catalyst(s) to transition metal component(s) of the metallocene catalyst ranging from about 0.5:1 to about 10000:1. In a more preferred embodiment, the molar ratio of co-catalyst(s) to transition metal component(s) ranges from about 0.5:1 to about 1000:1.

Optionally, any organometallic compound(s) may be added to the polymerization medium in addition to the metallocene catalyst herein. The organometallic compounds may be added for many purposes such as catalyst activity modifiers, particle morphology control agents and/or electrostatic charge mediators. Preferred for use herein are organoaluminum compounds such as trialkylaluminums, dialkylaluminum halides, alkylaluminum dihalides and alkylaluminum sesquihalides. Exemplary of such compounds are trimethylaluminum, triethylaluminum, tri-*n*-propylaluminum, tri-*n*-butylaluminum, triisobutylaluminum, tri-*n*-hexylaluminum, triisohexylaluminum, tri-2-methylpentylaluminum, tri-*n*-octylaluminum, tri-*n*-decylaluminum, dimethylaluminum chloride, diethylaluminum chloride, dibutylaluminum chloride, diisobutylaluminum chloride, diethylaluminum bromide and diethylaluminum iodide, methylaluminum dichloride, ethylaluminum dichloride, butylaluminum dichloride, isobutylaluminum dichloride, ethylaluminum dibromide and ethylaluminum diiodide, methylaluminum sesquichloride, ethylaluminum sesquichloride, *n*-butylaluminum sesquichloride, isobutylaluminum sesquichloride, ethylaluminum sesquifluoride, ethylaluminum sesquibromide, ethylaluminum sesquiiodide and mixtures thereof.

The at least one or more organometallic compound(s), if utilized, can be added to the polymerization medium in any manner. For example, the organometallic compound(s) can be introduced directly into the polymerization medium or premixed with the specified compound prior to addition to the polymerization medium. The amount of organometallic compound(s) added to the polymerization medium is any amount that is suitable to achieve the desired purpose. In a preferred embodiment, the molar ratio of organometallic compound(s) to the specified compound ranges from about 100:1 to about 1:1.

The polymerization reaction is carried out in the presence of a specified compound selected from the following. It is essential that the specified compound be utilized in an amount that will be sufficient to result in the production of polyolefins characterized by having a molecular weight distribution narrower than polyolefins having a molecular weight distribution greater than two obtained in the absence of utilizing the specified compound in the specified amount.

The compounds that are used, in amounts effective to narrow the molecular weight distribution (MWD) of the polyolefins of the present process, are as follow:
A compound containing an element of Group 14 (carbon, silicon, germanium, tin and lead) selected from the following:
   An inorganic oxide of germanium, tin and lead such as GeO, GeO₂, SnO, SnO₂, PbO, PbO₂, Pb₂O₃ and Pb₃O₄; and
   Mixtures thereof.

When the specified compound is a liquid or solid at 1 atmosphere of pressure and at 20°C, it is preferred to incorporate the specified compound in a molar ratio of specified compound to transition metal component(s) of the metallocene catalyst ranging from about 0.001:1 to about 100:1. In a more preferred embodiment, where the specified compound is a liquid or solid, the molar ratio of the specified compound to transition metal component(s) ranges from about 0.01:1 to about 50:1. When the specified compound is a gas at 1 atmosphere of pressure and at 20°C, it is preferred to incorporate the gaseous compound at a concentration in the polymerization medium ranging from about 1 ppm by volume to about 10,000 ppm by volume. In a more preferred embodiment, the concentration of the gaseous compound in the polymerization medium ranges from about 1 ppm by volume to about 1000 ppm by volume.

In carrying out the polymerization reaction of the present process there may be added other conventional additives generally utilized in processes for polymerizing olefins. Specifically there may be added any halogenated hydrocarbon and/or electron donor(s).

In carrying out the polymerization process of the present invention, the optional halogenated hydrocarbon may be added to the polymerization medium in any amount sufficient to effect production of the desired polyolefin. It is preferred to incorporate the halogenated hydrocarbon in a molar ratio of halogenated hydrocarbon to metal component of the metallocene catalyst ranging from about 0.001:1 to about 100:1. In a more preferred embodiment, the molar ratio of halogenated hydrocarbon to metal component ranges from about 0.001:1 to about 10:1.

There are also provided herein novel polyethylenes. These polyethylenes are homopolymers of ethylene and copolymers of ethylene and at least one or more alpha-olefins having 3 to 16 carbon atoms wherein ethylene comprises at least about 50% by weight of the total monomers involved.

Any conventional additive may be added to the olefin polymers and interpolymers of the present invention. Examples of the additives include nucleating agents, heat stabilizers, antioxidants of phenol type, sulfur type and phosphorus type, lubricants, antistatic agents, dispersants, copper harm inhibitors, neutralizing agents, foaming agents, plasticizers, anti-foaming agents, flame retardants, crosslinking agents, flowability improvers such as peroxides, ultraviolet light absorbers, light stabilizers, weathering stabilizers, weld strength improvers, slip agents, anti-blocking agents, antifogging agents, dyes, pigments, natural oils, synthetic oils, waxes, fillers and rubber ingredients.

### Illustrative Examples

In the following examples the molecular weight distribution (MWD), the ratio of Mw/Mn, of the olefin polymers and interpolymers is determined with a Waters Gel Permeation Chromatograph Series 150C equipped with Ultrastyrogel columns and a refractive index detector. The operating temperature of the instrument was set at 140°C, the eluting solvent was o-dichlorobenzene, and the calibration standards included 10 polystyrenes of precisely known molecular weight, ranging from a molecular weight of 1000 to a molecular weight of 1.3 million, and a polyethylene standard, NBS 1475.

The polymerization process utilized in Examples 1-12 herein is carried out in a fluidized-bed reactor for gas-phase polymerization, consisting of a vertical cylinder of diameter 0.74 meters and height 7 meters and surmounted by a velocity reduction chamber. The reactor is provided in its lower part with a fluidization grid and with an external line for recycling gas, which connects the top of the velocity reduction chamber to the lower part of the reactor, at a point below the fluidization grid. The recycling line is equipped with a compressor for circulating gas and a heat transfer means such as a heat exchanger. In particular the lines for supplying ethylene, an olefin such as 1-butene, 1-pentene and 1-hexene, hydrogen and nitrogen, which represent the main constituents of the gaseous reaction mixture passing through the fluidized bed, feed into the recycling line. Above the fluidization grid, the reactor contains a fluidized bed consisting of a polyethylene powder made up of particles with a weight-average diameter of about 0.5 mm to about 1.4 mm. The gaseous reaction mixture, which contains ethylene, olefin comonomer, hydrogen, nitrogen and minor amounts of other components, passes through the fluidized bed under a pressure ranging from about 280 psig to about 300 psig with an ascending fluidization speed, referred to herein as fluidization velocity, ranging from about 1.6 feet per second to about 2.0 feet per second.

When a liquid compound is utilized to narrow the molecular weight distribution, the liquid compound is introduced continuously into the line for recycling the gaseous reaction mixture as a solution, for example, in n-hexane, n-pentane, isopentane or 1-hexene, at a concentration of about 1 weight percent.

When a gaseous compound is utilized to narrow the molecular weight distribution, for example, N₂O, the gaseous compound is introduced continuously into the line for recycling the gaseous reaction mixture.

### EXAMPLE 1

The polymerization process is carried out as described above. The olefins used herein are ethylene and 1-hexene. Hydrogen is used to control molecular weight. The metallocene catalyst comprises bis(1-butyl-3-methylcyclopentadienyl)zirconium dichloride and methylaluminoxane supported on silica. There can be produced an interpolymer having a molecular weight distribution greater than 2.

The molecular weight distribution (MWD) of the ethylene/1-hexene interpolymer is expected to be reduced as a result of incorporating dinitrogen monoxide (N₂O) in the polymerization medium.

### EXAMPLES 2-6

The process of Example 1 is followed with the exception that in place of the 1-hexene there is utilized the following comonomers:

| | |
|---|---|
| Example 2 | propylene, |
| Example 3 | 1-butene, |
| Example 4 | 1-pentene, |
| Example 5 | 4-methylpent-1-ene, |
| Example 6 | 1-octene. |

In each of the above Examples 2-6 the molecular weight distribution of the ethylene/olefin interpolymer having a molecular weight distribution greater than two is expected to be reduced as a result of incorporating the dinitrogen monoxide in the polymerization medium.

### EXAMPLES 7-11

The process of Example 1 is followed with the exception that the supported metallocene catalyst is replaced with the following silica supported metallocene catalysts:

| | |
|---|---|
| Example 7 | bis(1-butyl-3-methylcyclopentadienyl)dimethyl-zirconium and tris(perfluorophenyl)borane, |
| Example 8 | bis(1-butyl-3-methylcyclopentadienyl)dimethyl-zirconium and triphenylmethylium tetrakis-(perfluorophenyl)borate, |
| Example 9 | (tert-butylamido)dimethyl(tetramethyl-η⁵-cyclopentadienyl)silanetitaniumdimethyl and triphenylmethylium tetrakis(perfluorophenyl)borate, |
| Example 10 | (tert-butylamido)dimethyl(tetramethyl-η⁵-cyclopentadienyl)silanetitaniumdimethyl and tris(perfluorophenyl)borane, |
| Example 11 | (tert-butylamido)dimethyl(tetramethyl-η⁵-cyclopentadienyl)silanetitaniumdimethyl and methylaluminoxane. |

In each of the above Examples 7-11 the molecular weight distribution of the ethylene/olefin interpolymer having a molecular weight distribution greater than two is expected to be reduced as a result of incorporating the dinitrogen monoxide in the polymerization medium.

### EXAMPLE 12

The process of Example 1 is followed with the exception that trimethylaluminum is added, in addition to the metallocene catalyst, to the polymerization process.

Films can be prepared from the ethylene/olefin interpolymers of the present invention.

Articles such as molded items can also be prepared from the ethylene/olefin interpolymers of the present invention.

It should be clearly understood that the forms of the invention herein described are illustrative only and are not intended to limit the scope of the invention. The present invention includes all modifications falling within the scope of the following claims.

## Claims

1. A process for polymerizing at least one or more olefin(s) comprising contacting, under polymerization conditions, the at least one or more olefin(s) with at least one metallocene catalyst comprising at least one transition metal component having at least one moiety selected from substituted or unsubstituted cyclopentadienyl, substituted or unsubstituted pentadienyl, substituted or unsubstituted pyrrole, substituted or unsubstituted phosphole, substituted or unsubstituted arsole, substituted or unsubstituted boratabenzene, and substituted or unsubstituted carborane, and at least one co-catalyst component, and a compound selected from the group consisting of an inorganic oxide of germanium, tin and lead; wherein the compound is present in an amount sufficient that the molecular weight distribution of the resulting polymeric product is narrower than would be obtained in the absence of the compound.

2. The process according to Claim 1 wherein the metal(s) of the at least one transition metal component is selected from Groups 3, 4, 5, 6, 7, 8, 9 and 10 of the Periodic Table of the Elements, as defined herein.

3. The process according to Claim 2 wherein the metal is selected from the group consisting of titanium, zirconium and mixtures thereof.

4. The process according to Claim 1 wherein the metallocene catalyst is supported on a carrier.

5. The process according to Claim 1 further comprising adding a halogenated hydrocarbon to the polymerization medium.

6. The process according to Claim 1 further comprising adding at least one or more organometallic compounds to the polymerization medium.

7. The process according to Claim 6 wherein the organometallic compound is an organoaluminum compound.

8. The process according to Claim 1 wherein the compound is a liquid or solid at 1 atmosphere of pressure and at 20°C and is present in the polymerization medium in a molar ratio of compound to transition metal component(s) of the metallocene catalyst ranging from about 0.001:1 to about 100:1.

9. The process according to Claim 1 wherein the compound is a gas at 1 atmosphere of pressure and at 20°C and is present in the polymerization medium in an amount ranging from about 1 ppm by volume to about 10,000 ppm by volume.

10. A process for narrowing molecular weight distribution of a polymer comprising at least one or more olefin(s) comprising contacting under polymerization conditions, the at least one or more olefin(s) with at least one metallocene catalyst comprising at least one transition metal compound having at least one moiety selected from substituted or unsubstituted cyclopentadienyl, substituted or unsubstituted pentadienyl, substituted or unsubstituted pyrrole, substituted or unsubstituted phosphole, substituted or unsubstituted arsole, substituted or unsubstituted boratabenzene, and substituted or unsubstituted carborane, and at least one co-catalyst component, and a compound selected from the group consisting of an inorganic oxide of germanium, tin and lead;
wherein the compound is present in an amount sufficient that the molecular weight distribution of the resulting polymeric product is narrower than would be obtained in the absence of the compound.

11. The process according to Claim 10 wherein the metal(s) of the at least one transition metal component is selected from Groups 3, 4, 5, 6, 7, 8, 9 and 10 of the Periodic Table of the Elements, as defined herein.

12. The process according to Claim 11 wherein the metal is selected from the group consisting of titanium, zirconium and mixture thereof.

13. The process according to Claim 10 wherein the metallocene catalyst is supported on a carrier.

14. The process according to Claim 10 further comprising adding a halogenated hydrocarbon to the polymerization medium.

15. The process according to Claim 10 further comprising adding at least one or more organometallic compounds to the polymerization medium.

16. The process according to Claim 15 wherein the organometallic compound is an organoaluminum compound.

17. The process according to Claim 10 wherein the compound is a liquid or solid at 1 atmosphere of pressure and at 20°C and is present in the polymerization medium in a molar ratio of compound to transition metal component(s) of the metallocene catalyst ranging from about 0.001:1 to about 100:1.

18. The process according to Claim 10 wherein the compound is a gas at 1 atmosphere of pressure and at 20°C and is present in the polymerization medium in an amount ranging from about 1 ppm by volume to about 10,000 ppm by volume.

19. The process according to Claim 1 wherein the polymerization conditions are gas phase.

## Patentansprüche

1. Verfahren zum Polymerisieren mindestens eines oder mehrerer Olefin(e), umfassend das Kontaktieren, unter Polymerisationsbedingungen, des mindestens einen oder der mehreren Olefin(e) mit mindestens einem Metallocen-Katalysator, umfassend mindestens eine Übergangsmetallkomponente mit mindestens einem Rest, der aus substituiertem oder unsubstituiertem Cyclopentadienyl, substituiertem oder unsubstituiertem Pentadienyl, substituiertem oder unsubstituiertem Pyrrol, substituiertem oder unsubstituiertem Phosphol, substituiertem oder unsubstituiertem Arsol, substituiertem oder unsubstituiertem Boratabenzol und substituiertem oder unsubstituiertem Carboran gewählt ist, und mindestens eine Co-Katalysator-Komponente, und einer Verbindung, gewählt aus der Gruppe, bestehend aus einem anorganischen Oxid von Germanium, Zinn und Blei; wobei die Verbindung in einer ausreichenden Menge vorhanden ist, so dass die Molekulargewichtsverteilung des resultierenden polymeren Produkts schmaler ist, als dies in Abwesenheit der Verbindung erhältlich wäre.

2. Verfahren gemäß Anspruch 1, wobei das/die Metall(e) der mindestens einen Übergangsmetallkomponente gewählt wird/werden aus den Gruppen 3, 4, 5, 6, 7, 8, 9 und 10 des Periodensystems der Elemente, wie hierin definiert.

3. Verfahren gemäß Anspruch 2, wobei das Metall gewählt wird aus der Gruppe, bestehend aus Titan, Zirkonium und Mischungen davon.

4. Verfahren gemäß Anspruch 1, wobei der Metallocen-Katalysator auf einem Träger getragen wird.

5. Verfahren gemäß Anspruch 1, ferner umfassend das Zusetzen eines halogenierten Kohlenwasserstoffs zu dem Polymerisationsmedium.

6. Verfahren gemäß Anspruch 1, ferner umfassend das Zusetzen mindestens einer oder mehrerer organometallischen Verbindungen zu dem Polymerisationsmedium.

7. Verfahren gemäß Anspruch 6, wobei die organometallische Verbindung eine Organoaluminiumverbindung ist.

8. Verfahren gemäß Anspruch 1, wobei die Verbindung bei 1 Atmosphäre Druck und bei 20°C eine Flüssigkeit oder ein Feststoff ist und in dem Polymerisationsmedium in einem Molverhältnis von Verbindung zu Übergangsmetallkomponente(n) des Metallocen-Katalysators im Bereich von etwa 0,001:1 bis etwa 100:1 vorhanden ist.

9. Verfahren gemäß Anspruch 1, wobei die Verbindung bei 1 Atmosphäre Druck und bei 20°C ein Gas ist und in dem Polymerisationsmedium in einer Menge im Bereich von etwa 1 Vol.-ppm bis etwa 10 000 Vol.-ppm vorhanden ist.

10. Verfahren zum Verengen der Molekulargewichtsverteilung eines Polymeren, umfassend mindestens ein oder mehrere Olefin(e), umfassend das Kontaktieren, unter Polymerisationsbedingungen, des mindestens einen oder der mehreren Olefin(e) mit mindestens einem Metallocen-Katalysator, umfassend mindestens eine Übergangsmetallverbindung mit mindestens einem Rest, der gewählt ist aus substituiertem oder unsubstituiertem Cyclopentadienyl, substituiertem oder unsubstituiertem Pentadienyl, substituiertem oder unsubstituiertem Pyrrol, substituiertem oder unsubstituiertem Phosphol, substituiertem oder unsubstituiertem Arsol, substituiertem oder unsubstituiertem Boratabenzol und substituiertem oder unsubstituiertem Carboran, und mindestens eine Co-Katalysator-Komponente, und einer Verbindung, gewählt aus der Gruppe, bestehend aus einem anorganischen Oxid von Germanium, Zinn und Blei;
wobei die Verbindung in einer ausreichenden Menge vorhanden ist, so dass die Molekulargewichtsverteilung des resultierenden polymeren Produkts schmaler ist, als dies in Abwesenheit der Verbindung erhältich wäre.

11. Verfahren gemäß Anspruch 10, wobei das/die Metall(e) der mindestens einen Übergangsmetallkomponente gewählt wird/werden aus den Gruppen 3, 4, 5, 6, 7, 8, 9 und 10 des Periodensystems der Elemente, wie hierin definiert.

12. Verfahren gemäß Anspruch 11, wobei das Metall gewählt wird aus der Gruppe, bestehend aus Titan, Zirkonium und Mischungen davon.

13. Verfahren gemäß Anspruch 10, wobei der Metallocen-Katalysator auf einem Träger getragen wird.

14. Verfahren gemäß Anspruch 10, ferner umfassend das Zusetzen eines halogenierten Kohlenwasserstoffs zu dem Polymerisationsmedium.

15. Verfahren gemäß Anspruch 10, ferner umfassend das Zusetzen mindestens einer oder mehrerer organometallischen Verbindungen zu dem Polymerisationsmedium.

16. Verfahren gemäß Anspruch 15, wobei die organometallische Verbindung eine Organoaluminiumverbindung ist.

17. Verfahren gemäß Anspruch 10, wobei die Verbindung bei 1 Atmosphäre Druck und bei 20°C eine Flüssigkeit oder ein Feststoff ist und in dem Polymerisationsmedium in einem Molverhältnis von Verbindung zu Übergangsmetallkomponente(n) des Metallocen-Katalysators im Bereich von etwa 0,001:1 bis etwa 100:1 vorhanden ist.

18. Verfahren gemäß Anspruch 10, wobei die Verbindung bei 1 Atmosphäre Druck und bei 20°C ein Gas ist und in dem Polymerisationsmedium in einer Menge im Bereich von etwa 1 Vol.-ppm bis etwa 10 000 Vol.-ppm vorhanden ist.

19. Verfahren gemäß Anspruch 1, wobei es sich bei den Polymerisationsbedingungen um die Gasphase handelt.

## Revendications

1. Procédé pour la polymérisation d'au moins une ou plusieurs oléfine(s), comprenant la mise en contact, dans les conditions de polymérisation, de l'au moins une ou plusieurs oléfine(s) avec au moins un catalyseur à métallocène comprenant au moins un composant de métal de transition ayant au moins un groupement choisi parmi le cyclopentadiényle substitué ou non substitué, le pentadiényle substitué ou non substitué, le pyrrole substitué ou non substitué, le phosphole substitué ou non substitué, l'arsole substitué ou non substitué, le boratabenzène substitué ou non substitué, et le carborane substitué ou non substitué, et au moins un composant de co-catalyseur, et un composé choisi dans le groupe comprenant un oxyde inorganique de germanium, d'étain et de plomb ; dans lequel le composé est présent dans une quantité suffisante pour que la distribution des poids moléculaires du produit polymère résultant soit plus étroite que celle qui serait obtenue en l'absence du composé.

2. Procédé selon la revendication 1, dans lequel le métal (les métaux) de l'au moins un composant de métal de transition est choisi dans les Groupes 3, 4, 5, 6, 7, 8, 9 et 10 du Tableau Périodique des Eléments, comme défini ici.

3. Procédé selon la revendication 2, dans lequel le métal est choisi dans le groupe comprenant le titane, le zirconium et les mélanges de ceux-ci.

4. Procédé selon la revendication 1, dans lequel le catalyseur à métallocène est supporté sur un support.

5. Procédé selon la revendication 1, comprenant en outre l'addition d'un hydrocarbure halogéné au milieu de polymérisation.

6. Procédé selon la revendication 1, comprenant en outre l'addition d'au moins un ou plusieurs composés organométalliques au milieu de polymérisation.

7. Procédé selon la revendication 6, dans lequel le composé organométallique est un composé organique de l'aluminium.

8. Procédé selon la revendication 1, dans lequel le composé est un liquide ou un solide à une pression de 1 atmosphère et à 20 °C et est présent dans le milieu de polymérisation dans un rapport molaire du composé sur le(s) composant(s) de métal de transition du catalyseur à métallocène allant d'environ 0,001 : 1 à environ 100 : 1.

9. Procédé selon la revendication 1, dans lequel le composé est un gaz à une pression de 1 atmosphère et à 20 °C et est présent dans le milieu de polymérisation dans une quantité allant d'environ 1 ppm en volume à environ 10 000 ppm en volume.

10. Procédé pour restreindre la distribution des poids moléculaires d'un polymère comprenant au moins une ou plusieurs oléfine(s), comprenant la mise en contact, dans les conditions de polymérisation, de l'au moins une ou plusieurs oléfine(s) avec au moins un catalyseur à métallocène comprenant au moins un composé de métal de transition ayant au moins un groupement choisi parmi le cyclopentadiényle substitué ou non substitué, le pentadiényle substitué ou non substitué, le pyrrole substitué ou non substitué, le phosphole substitué ou non substitué, l'arsole substitué ou non substitué, le boratabenzène substitué ou non substitué, et le carborane substitué ou non substitué, et au moins un composant de co-catalyseur, et un composé choisi dans le groupe comprenant un oxyde inorganique de germanium, d'étain et de plomb ; dans lequel le composé est présent dans une quantité suffisante pour que la distribution des poids moléculaires du produit polymère résultant soit plus étroite que celle qui serait obtenue en l'absence du composé.

11. Procédé selon la revendication 10, dans lequel le métal (les métaux) de l'au moins un composant de métal de transition est choisi dans les Groupes 3, 4, 5, 6, 7, 8, 9 et 10 du Tableau Périodique des Eléments, comme défini ici.

12. Procédé selon la revendication 11, dans lequel le métal est choisi dans le groupe comprenant le titane, le zirconium et les mélanges de ceux-ci.

13. Procédé selon la revendication 10, dans lequel le catalyseur à métallocène est supporté sur un support.

14. Procédé selon la revendication 10, comprenant en outre l'addition d'un hydrocarbure halogéné au milieu de polymérisation.

15. Procédé selon la revendication 10, comprenant en outre l'addition d'au moins un ou plusieurs composés organométalliques au milieu de polymérisation.

16. Procédé selon la revendication 15, dans lequel le composé organométallique est un composé organique de l'aluminium.

17. Procédé selon la revendication 10, dans lequel le composé est un liquide ou un solide à une pression de 1 atmosphère et à 20 °C et est présent dans le milieu de polymérisation dans un rapport molaire du composé sur le(s) composant(s) de métal de transition du catalyseur à métallocène allant d'environ 0,001 : 1 à environ 100 : 1.

18. Procédé selon la revendication 10, dans lequel le composé est un gaz à une pression de 1 atmosphère et à 20 °C et est présent dans le milieu de polymérisation dans une quantité allant d'environ 1 ppm en volume à environ 10 000 ppm en volume.

19. Procédé selon la revendication 1, dans lequel les conditions de polymérisation sont la phase gazeuse.
